# EUROPEAN PATENT SPECIFICATION

(11) **EP 1 207 740 B1**
(45) Date of publication and mention of the grant of the patent: **06.12.2006**
(21) Application number: 00941650.4
(22) Date of filing: 22.06.2000
(51) Int. Cl.: A01N 25/34, C08J 5/06, C08J 11/06, B29B 15/08

(54) **TEXTURIZED CELLULOSIC AND LIGNOCELLULOSIC MATERIALS AND COMPOSITIONS AND COMPOSITES MADE THEREFROM**
TEXTURIERTE MATERIALEN AUS ZELLULOSE UND LIGNOZELLULOSE UND DAMIT HERGESTELLTE ZUSAMMENSETZUNGEN UND VERBUNDWERKSTOFFE
MATERIAUX ET COMPOSITIONS CELLULOSIQUES ET LIGNOCELLULOSIQUES TEXTURES; COMPOSITIONS ET COMPOSITES TIRES DE CES MATERIAUX ET COMPOSITIONS

(30) Priority: 22.06.1999 US 337580; 22.06.1999 US 338209
(43) Date of publication of application: 29.05.2002
(60) Divisional application: 06076544.3
(73) Proprietor: Xyleco, Inc., Brookline, MA 02445 (US)
(72) Inventor: MEDOFF, Marshall, Brookline, MA 02445 (US); LAGACE, Arthur, Newtonville, MA 02460 (US)
(74) Representative: Charig, Raymond Julian
(86) International application number: PCT/US2000/017232
(87) International publication number: WO 2000/078127

(56) References cited:
- WO-A-00/29183
- WO-A-97/06942
- DE-A- 4 331 747
- JP-A- 6 303 440
- JP-A- 60 168 611
- JP-A- 61 273 805
- JP-A- 63 033 441
- JP-A- 63 033 442
- US-A- 3 697 364
- US-A- 3 709 845
- US-A- 4 244 847
- US-A- 4 791 020
- US-A- 5 331 087
- US-A- 5 516 472
- US-A- 5 663 216
- PATENT ABSTRACTS OF JAPAN vol. 012, no. 242 (C-510), 8 July 1988 (1988-07-08) & JP 63 033448 A (NIPPON DENSO CO LTD;OTHERS: 01), 13 February 1988 (1988-02-13)

## Description

The invention relates to texturized cellulosic or lignocellulosic materials (e.g., texturized poly-coated paper) and compositions and composites made from such texturized materials.

Cellulosic and lignocellulosic materials are produced, processed, and used in large quantities in a number of applications. For example, paper coated with a polymer (i.e., poly-coated paper) is used to make a variety of food containers, including individual-serving size juice cartons and boxes for frozen foods. Once used, these cellulosic and lignocellulosic materials are usually discarded. As a result, there is an ever-increasing amount of waste cellulosic and lignocellulosic material.

JP 63 033448 discloses a polyolefin composition for moulding that comprises vegetable fibres containing fibrillated cellulose as the main component and having a shortened moulding cycle. The fibrillated cellulose is described as being created from e.g. finely cut newspaper which is mixed in a heated mixer with the polymeric component and blended in a wet state.

US 3697394 discloses composites consisting of vulcanized rubbers and other elastomers with discontinuous cellulose fibre reinforcements.

WO 0029183 discloses an injection mouldable granulate and a method for the production thereof, based on recycled raw materials.

US 4244847 discloses a process for preparing a fibre-reinforced elastomer composite comprising cellulosic or synthetic fibres in a cured elastomeric matrix.

US 4791020 discloses composites prepared from polyethylene and certain types of cellulose fibre.

WO 9706942 describes a process for the manufacture of section material composed of thermoplastic material. Straw or china grass fibre may be used as additives in the material.

US A5331087 discloses a method for reprocessing, used plastic coated cardboard through comminution and further disintegration in aqueous suspension.

JP 63 033440, JP 63 033441 and JP 63 033442 relate to the production of composites consisting of polyolefin and fibrillated cellulose vegetable fibres produced from waste newspaper.

JP 61 243805 discloses a method of impregnating pulp with an aqueous solution based on acrylic acid and polymerisation of the monomer through the action of heat and shearing producing a water-absorptive composite material.

60 168611 discloses a method of manufacturing a pulp-fibre mixed resin composition through mixing scrap cardboard and polyolefin in a heated wet mixture with water, producing a granulated product for injection moulding.

US 3709845 discloses vulcanized composites of rubber and other elastomers with cellulose fibre reinforcements.

DE 4331747 discloses a natural substance granulate produced by extrusion from predominantly renewable raw materials (lignin, natural rubber, natural fibres etc.) that may be processed into moulded parts like ordinary thermoplastic materials.

US 5663216 discloses a reinforced substantially biologically degradable polymer, reinforced by natural fibres, as well as a process for its production.

### Summary of the Invention

The invention provides a composite according to claim 1.

Also disclosed herein is a process for preparing a texturized fibrous material The process involves shearing a cellulosic or lignocellulosic material having internal fibers (e.g., flax, hemp, cotton, jute, rags, finished or unfinished paper, poly-coated paper, paper products, or byproducts of paper manufacturing such as pulp board, or synthetic cellulosic or lignocellulosic materials such as rayon), to the extent that the internal fibers are substantially exposed, resulting in texturized fibrous material. The cellulosic or lignocellulosic material can be, for example, a woven material such as a woven fabric, or a non-woven material such as paper or bathroom tissue. The exposed fibers of the texturized fibrous material can have a length/diameter (L/D) ratio of at least about 5 (e.g., at least about 5, 10,25, 50, or more). For example, at least about 50% of the fibers can have LID ratios of this magnitude.

In one embodiment, the invention features a texturized fibrous material that includes a cellulosic or lignocellulosic material (e.g., poly-coated paper) having internal fibers, where the cellulosic or lignocellulosic material is sheared to the extent that the internal fibers are substantially exposed.

The texturized fibrous material can, for example, be incorporated into (e.g., associated with, blended with, adjacent to, surrounded by, or within) a structure or carrier (e.g., a netting, a membrane, a flotation device, a bag, a shell, or a biodegradable substance). Optionally, the structure or carrier may itself be made from a texturized fibrous material (e.g., a texturized fibrous material of the invention), or of a composition or composite of a texturized fibrous material.

The texturized fibrous material can have a bulk density less than about 0.5 grams per cubic centimeter (g/cm³), or even less than about 0.2 g/cm³.

Compositions that include the texturized fibrous materials described above, together with a chemical or chemical formulation (e.g., a pharmaceutical such as an antibiotic or contraceptive, optionally with an excipient; an agricultural compound such as a fertilizer, herbicide, or pesticide; or a formulation that includes enzymes) are also within the scope of the invention, as are compositions that include the texturized fibrous materials and other liquid or solid ingredients (e.g., particulate, powdered, or granulated solids such as plant seed, foodstuffs, or bacteria).

Composites that include thermoplastic resin and the texturized fibrous materials are also contemplated. The resin can be, for example, polyethylene, polypropylene, polystyrene, polycarbonate, polybutylene, a thermoplastic polyester, a polyether, a thermoplastic polyurethane, polyvinylchloride, or a polyamide, or a combination of two or more resins.

In some cases, at least about 5% by weight (e.g., 5%, 10%, 25%, 50%, 75%, 90%, 95%, 99%, or about 100%) of the fibrous material included in the composites is texturized.

The composite may include, for example, about 30% to about 70% by weight resin and about 30% to about 70% by weight texturized fibrous material, although proportions outside of these ranges may also be used. The composites can be quite strong, in some cases having a flexural strength of at least about 6,000 to 10,000 psi.

The composites can also include inorganic additives such as calcium carbonate, graphite, asbestos, wollastonite, mica, glass, fiber glass, chalk, talc, silica, ceramic, ground construction waste, tire rubber powder, carbon fibers, or metal fibers (e.g., stainless steel or aluminum).

The inorganic additives can represent about 0.5% to about 20% of the total weight of the composite.

The composite can be in the form of, for example, a pallet (e.g., an injection molded pallet), pipes, panels, decking materials, boards, housings, sheets, poles, straps, fencing, members, doors, shutters, awnings, shades, signs, frames, window casings, backboards, wallboards, flooring, tiles, railroad ties, forms, trays, tool handles, stalls, bedding, dispensers, staves, films, wraps, totes, barrels, boxes, packing materials, baskets, straps, slips, racks, casings, binders, dividers, walls, indoor and outdoor carpets, rugs, wovens, and mats, frames, bookcases, sculptures, chairs, tables, desks, art, toys, games, wharves, piers, boats, masts, pollution control products, septic tanks, automotive panels, substrates, computer housings, above- and below-ground electrical casings, furniture, picnic tables, tents, playgrounds, benches, shelters, sporting goods, beds, bedpans, thread, filament, cloth, plaques, trays, hangers, servers, pools, insulation, caskets, bookcovers, clothes, canes, crutches, and other construction, agricultural, material handling, transportation, automotive, industrial, environmental, naval, electrical, electronic, recreational, medical, textile, and consumer products. The composites can also be in the form of a fiber, filament, or film.

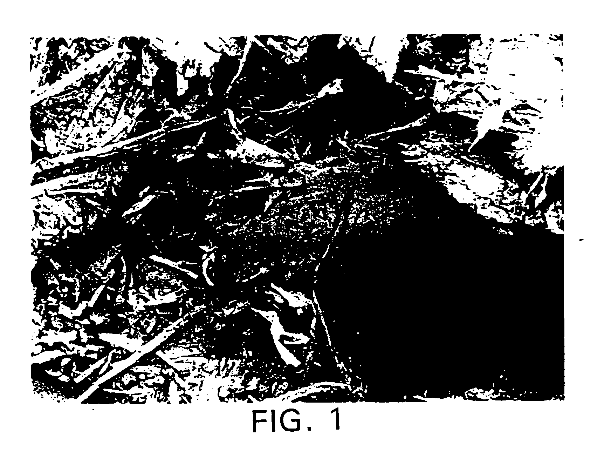

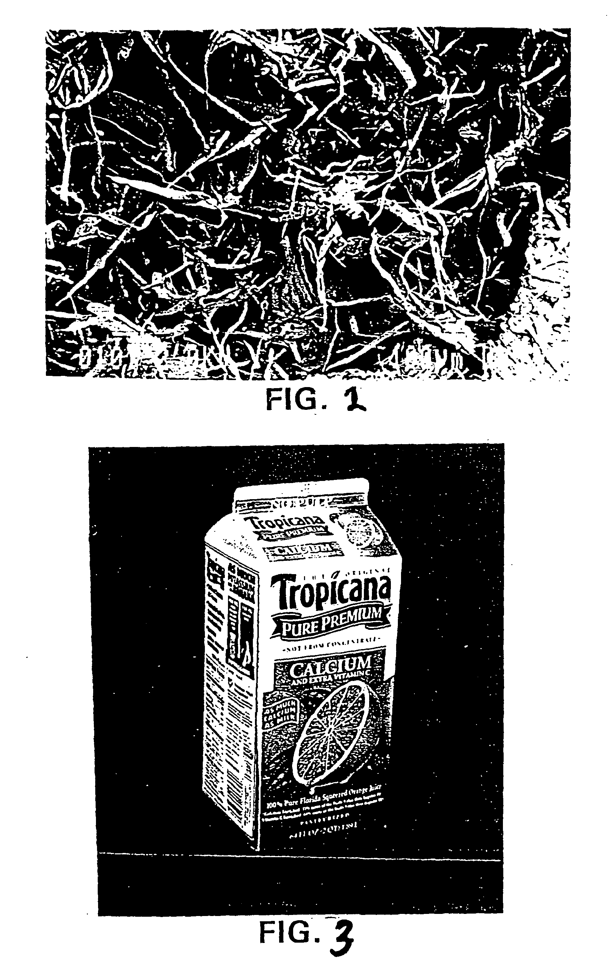

The terms "texturized cellulosic or lignocellulosic material" and "texturized fibrous material" as used herein, mean that the cellulosic or lignocellulosic material has been sheared to the extent that its internal fibers are substantially exposed. At least about 50%, more preferably at least about 70%, of these fibers have a length/diameter (L/D) ratio of at least 5, more preferably at least 25, or at least 50. An example of texturized cellulosic material (i.e., texturized newsprint) is shown in Fig. 1. An example of texturized poly-coated paper is shown in Fig. 2.

The texturized fibrous materials of the invention have properties that render them useful for various applications. For example, the texturized fibrous materials have absorbent properties, which can be exploited, for example, for pollution control. The fibers are generally biodegradable, making them suitable, for example, for drug or chemical delivery (e.g., in the treatment of humans, animals, or in agricultural applications). The texturized fibrous materials can also be used to reinforce polymeric resins.

Those composites that include texturized fibrous material and resin are strong, light-weight, and inexpensive. The raw materials used to make the composites are available as virgin or recycled materials; for example, they may include discarded containers composed of resins, and waste cellulosic or lignocellulosic fiber (e.g., discarded containers composed of poly-coated paper).

Poly-coated paper can be difficult to recycle because the paper and the polymer layers generally cannot be separated. In the present invention, both the paper and the polymer portions are utilized, so there is no need to separate the two. Poly-coated paper including one or more layers of aluminum can similarly be used. The invention thus helps to recycle discarded post-consumer containers, while at the same time producing useful products.

Other features and advantages of the invention will be apparent from the following detailed description, and from the claims.

### Brief Description of the Drawing

Fig. 1 is a photograph of a texturized newspaper, magnified fifty times.
Fig. 2 is a photograph of texturized poly-coated paper, magnified fifty times.
Fig. 3 is a photograph of a half-gallon polyboard juice carton.
Fig. 4 is a photograph of shredded half-gallon polyboard juice cartons.
Fig. 5 is a photograph of texturized fibrous material prepared by shearing the shredded half-gallon polyboard juice cartons of Fig. 4.

### Detailed Description of the Invention

Examples of cellulosic raw materials include paper and paper products such as newsprint and effluent from paper manufacture, and poly-coated paper. Examples of lignocellulosic raw materials include wood, wood fibers, and wood-related materials, as well as materials derived from kenaf, grasses, rice hulls, bagasse, cotton, jute, other stem plants (e.g., hemp, flax, bamboo; both bast and core fibers), leaf plants (e.g., sisal, abaca), and agricultural fibers (e.g., cereal straw, corn cobs, rice hulls, and coconut hair). Aside from virgin raw materials, post-consumer, industrial (e.g., offal), and processing waste (e.g., effluent) can also be used as fiber sources.

Poly-coated paper is available in a variety of forms. For example, whole sheets of virgin poly-coated paper can be purchased from International Paper, New York. Alternatively, virgin waste poly-coated paper (e.g., edge trimmings, surplus, misprinted stock) can be obtained from International Paper or other paper manufacturers. Used poly-coated paper, in the form of discarded food and beverage containers, can be gathered from various sources, including waste and recycling streams. Poly-coated paper can be made of a polymer (e.g., polyethylene) and paper, and, in some cases, one or more layers of aluminum. Poly-coated paper that includes one or more layers of aluminum foil is commonly used for airtight liquid storage. Used, waste, or scrap poly-coated paper (e.g., post-consumer waste, industrial offal) can also be purchased from brokers of this material.

### Preparation of Texturized Fibrous Material

If scrap cellulosic or lignocellulosic materials are used, they should be clean and dry. The raw material can be texturized using any one of a number of mechanical means, or combinations thereof. One method of texturizing includes first cutting the cellulosic or lignocellulosic material into 1/4- to 1/2-inch pieces, if necessary, using a standard cutting apparatus. Counter-rotating screw shredders and segmented rotating screw shredders such as those manufactured by Munson (Utica, NY) can also be used, as can a standard document shredder as found in many offices.

The cellulosic or lignocellulosic material is then sheared with a rotary cutter, such as the one manufactured by Sprout, Waldron Companies, as described in Perry's Chem. Eng. Handbook, 6th Ed., at 8-29 (1984). Although other settings can be used, the spacing between the rotating knives and bed knives of the rotary cutter is typically set to 0.020" or less, and blade rotation is set to 750 rpm or more. The rotary cutter can be cooled to 100°C or lower during the process, for example, using a water jacket.

The texturized material is passed through a discharge screen. Larger screens (e.g., up to 6 mm) can be used in large-scale production. The cellulosic or lignocellulosic feedstock is generally kept in contact with the blades of the rotary cutter until the fibers are pulled apart; smaller screens (e.g., 2 mm mesh) provide longer residence times and more complete texturization, but can result in lower length/diameter (L/D) aspect ratios. A vacuum drawer can be attached to the screen to maximize and maintain fiber length/diameter aspect ratio.

The texturized fibrous materials can be directly stored in sealed bags or may be dried at approximately 105°C for 4-18 hours (e.g., until the moisture content is less than about 0.5%) immediately before use. Fig. 1 is an SEM photograph of texturized newspaper.

### Uses of Texturized Fibrous Material

Texturized fibrous materials and compositions and composites of such fibers with other chemicals and chemical formulations can be prepared to take advantage of the material's properties. The materials can be used to absorb chemicals, for example, potentially absorbing many times their own weight. Thus, the materials could, for instance, be used to absorb spilled oil, or for clean-up of environmental pollution, for example, in water, in the air, or on land. Similarly, the material's absorbent properties, together with its biodegradability, also make them useful for delivery of chemicals or chemical formulations. For example, the materials can be treated with solutions of enzymes or pharmaceuticals such as antibiotics, nutrients, or contraceptives, and any necessary excipients, for drug delivery (e.g., for treatment of humans or animals, or for use as or in animal feed and/or bedding), as well as with solutions of fertilizers, herbicides, or pesticides. The materials can optionally be chemically treated to enhance a specific absorption property. For example, the materials can be treated with silanes to render them lipophilic.

Compositions including texturized materials combined with liquids or particulate, powdered, or granulated solids can also be prepared. For example, texturized fibrous materials can be blended with seeds (i.e., with or without treatment with a solution of fertilizer, pesticides, etc.), foodstuffs, or bacteria (e.g., bacteria that digest toxins). The ratio of fibrous materials to the other components of the compositions will depend on the nature of the components and readily be adjusted for a specific product application.

In some cases, it may be advantageous to associate the texturized fibrous materials, or compositions or composites of such materials, with a structure or carrier such as a netting, a membrane, a flotation device, a bag, a shell, or a biodegradable substance. Optionally, the structure of carrier may itself be made of a texturized fibrous material (e.g., a material of the invention), or a composition or composite thereof.

### Composites of Texturized Fibrous Material and Resin

Texturized fibrous materials can also be combined with resins to form strong, lightweight composites. Materials that have been treated with chemicals or chemical formulations, as described above, can similarly be combined with biodegradable or non-biodegradable resins to form composites, allowing the introduction of, for example, hydrophilic substances into otherwise hydrophobic polymer matrices. Alternatively, the composites including texturized fibrous materials and resin can be treated with chemicals or chemical formulations.

The texturized cellulosic or lignocellulosic material provides the composite with strength. The composite may include from about 10% to about 90%, for example from about 30% to about 70%, of the texturized cellulosic or lignocellulosic material by weight. Combinations of texturized fibrous materials can also be used (e.g., texturized poly-coated paper blended with texturized wood-related materials or other cellulosic or lignocellulosic fibers).

The resin encapsulates the texturized cellulosic or lignocellulosic material in the composites, and helps control the shape of the composites. The resin also transfers external loads to the fibrous materials and protects the fiber from environmental and structural damage. Composites can include, for example, about 10% to about 90%, more preferably about 30% to about 70%, by weight, of the resin.

Examples of resins that are suitably combined with texturized fibers include polyethylene (including, e.g., low density polyethylene and high density polyethylene), polypropylene, polystyrene, polycarbonate, polybutylene, thermoplastic polyesters (e.g., PET), polyethers, thermoplastic polyurethane, PVC, polyamides (e.g., nylon) and other resins. It is preferred that the resins have a low melt flow index. Preferred resins include polyethylene and polypropylene with melt flow indices of less than 3 g/10 min, and more preferably less than 1 g/10 min.

The resins can be purchased as virgin material, or obtained as waste materials, and can be purchased in pelletized or granulated form. One source of waste resin is used polyethylene milk bottles. If surface moisture is present on the pelletized or granulated resin, however, it should be dried before use.

The composites can also include coupling agents. The coupling agents help to bond the hydrophilic fibers to the hydrophobic resins. Examples of coupling agents include maleic anhydride modified polyethylenes, such those in the FUSABOND^{®} (available from Dupont, Delaware) and POLYBOND^{®} (available from Uniroyal Chemical, Connecticut) series. One suitable coupling agent is a maleic anhydride modified high density polyethylene such as FUSABOND^{®} MB 100D.

The composites can also contain additives known to those in the art of compounding, such as plasticizers, lubricants, antioxidants, opacificers, heat stabilizers, colorants, flame retardants, biocides, impact modifiers, photostabilizers, and antistatic agents.

The composites can also include inorganic additives such as calcium carbonate, graphite, asbestos, wollastonite, mica, glass, fiber glass, chalk, silica, talc, ceramic, ground construction waste, tire rubber powder, carbon fibers, or metal fibers (e.g., aluminum, stainless steel). When such additives are included, they are typically present in quantities of from about 0.5% up to about 20-30% by weight. For example, submicron calcium carbonate can be added to the composites of texturized fibrous material and resin to improve impact modification characteristics or to enhance composite strength.

### Preparation of Compositions

Compositions containing the texturized cellulosic or lignocellulosic materials and chemicals, chemical formulations, or other solids can be prepared, for example, in various immersion, spraying, or blending apparatuses, including, but not limited to, ribbon blenders, cone blenders, double cone blenders, and Patterson-Kelly "V" blenders.

For example, a composition containing 90% by weight texturized cellulosic or lignocellulosic material and 10% by weight ammonium phosphate or sodium bicarbonate can be prepared in a cone blender to create a fire-retardant material for absorbing oil.

### Preparation of Composites of Texturized Fiber and Resin

Composites of texturized fibrous material and resin can be prepared as follows. A standard rubber/plastic compounding 2-roll mill is heated to 325-400°F. The resin (usually in the form of pellets or granules) is added to the heated roll mill. After about 5 to 10 minutes, the coupling agent is added to the roll mill. After another five minutes, the texturized cellulosic or lignocellulosic material is added to the molten resin/coupling agent mixture. The texturized material is added over a period of about 10 minutes.

The composite is removed from the roll mill, cut into sheets and allowed to cool to room temperature. It is then compression molded into plaques using standard compression molding techniques.

Alternatively, a mixer, such as a Banbury internal mixer, is charged with the ingredients. The ingredients are mixed, while the temperature is maintained at less than about 190°C. The mixture can then be compression molded.

The ingredients can alternatively be mixed in an extruder mixer, such as a twin-screw extruder equipped with co-rotating screws. The resin and the coupling agent are introduced at the extruder feed throat; the texturized cellulosic or lignocellulosic material or materials are introduced about 1/3 of the way down the length of the extruder into the molten resin. The internal temperature of the extruder is maintained at less than about 190°C. At the output, the composite can be, for example, pelletized by cold strand cutting.

Alternatively, the mixture can first be prepared in a mixer, then transferred to an extruder.

The composite can be formed into filaments for knitting, warping, weaving, braiding, or in the manufacture of non-wovens. Alternatively, the composite can be made into a film.

### Properties of the Composites of Texturized Fibrous Material and Resin

The resulting composites include a network of fibers, encapsulated within a resin matrix. The fibers form a lattice network, which provides the composite with strength. Since the cellulosic or lignocellulosic material is texturized, the amount of surface area available to bond to the resin is increased, in comparison to composites prepared with un-texturized cellulosic or lignocellulosic material. The resin binds to the surfaces of the exposed fibers, creating an intimate blend of the fiber network and the resin matrix. The intimate blending of the fibers and the resin matrix further strengthens the composites.

### Uses of the Composites of Texturized Fibrous Material and Resin

The resin/fibrous material composites can be used in a number of applications. The composites are strong and light weight; they can be used, for example, as wood substitutes. The resin coating renders the composites water-resistant, so they may be used in outdoor applications. For example, the composites may be used to make pallets, which are often stored outdoors for extended periods of time, wine staves, rowboats, furniture, skis, and oars. Many other uses are contemplated, including panels, pipes, decking materials, boards, housings, sheets, poles, straps, fencing, members, doors, shutters, awnings, shades, signs, frames, window casings, backboards, wallboards, flooring, tiles, railroad ties, forms, trays, tool handles, stalls, bedding, dispensers, staves, films, wraps, totes, barrels, boxes, packing materials, baskets, straps, slips, racks, casings, binders, dividers, walls, indoor and outdoor carpets, rugs, wovens, and mats, frames, bookcases, sculptures, chairs, tables, desks, art, toys, games, wharves, piers, boats, masts, pollution control products, septic tanks, automotive panels, substrates, computer housings, above- and below-ground electrical casings, furniture, picnic tables, tents, playgrounds, benches, shelters, sporting goods, beds, bedpans, thread, filament, cloth, plaques, trays, hangers, servers, pools, insulation, caskets, bookcovers, clothes, canes, crutches, and other construction, agricultural, material handling, transportation, automotive, industrial, environmental, naval, electrical, electronic, recreational, medical, textile, and consumer products. Numerous other applications are also envisioned. The composites may also be used, for example, as the base or carcass for a veneer product. Moreover, the composites can be, for example, surface treated, grooved, milled, shaped, imprinted, textured, compressed, punched, or colored. The surface of the composites can be smooth or rough.

The following examples illustrate certain embodiments and aspects of the present invention and not to be construed as limiting the scope thereof.

### Examples

### Example 1

A 1500 pound skid of virgin, half-gallon juice cartons made of polycoated white kraft board was obtained from International Paper. One such carton is shown in Fig. 3. Each carton was folded flat.

The cartons were fed into a 3 hp Flinch Baugh shredder at a rate of approximately 15 to 20 pounds per hour. The shredder was equipped with two rotary blades, each 12" in length, two fixed blades, and a 0.3" discharge screen. The gap between the rotary and fixed blades was 0.10".

A sample of the output from the shredder, consisting primarily of confetti-like pieces, about 0.1" to 0.5" in width and about 0.25" to 1" in length, is shown in Fig. 4. The shredder output was fed into a Thomas Wiley Mill Model 2D5 rotary cutter. The rotary cutter had four rotary blades, four fixed blades, and a 2 mm discharge screen. Each blade was approximately 2" long. The blade gap was set at 0.020".

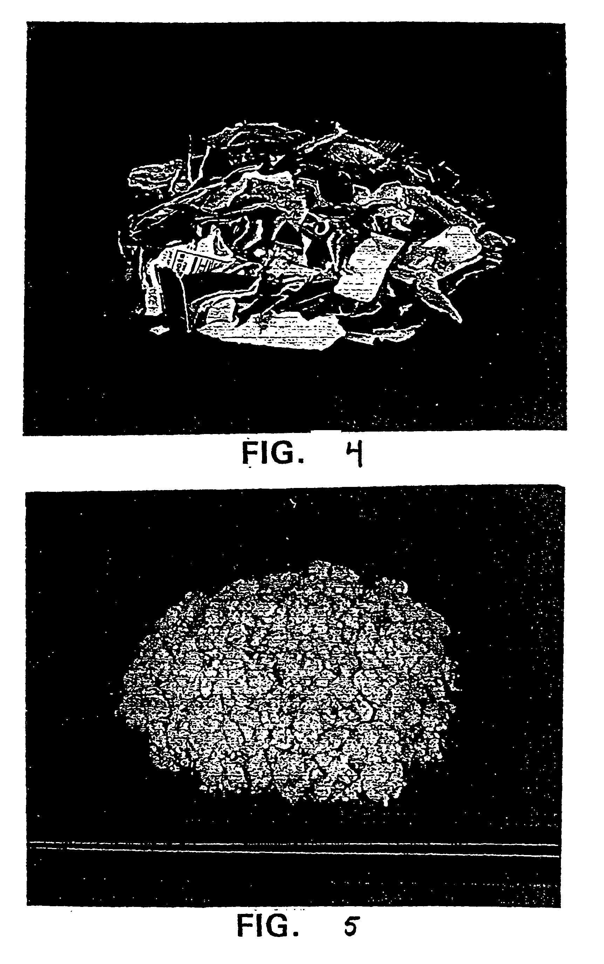

The rotary cutter sheared the confetti-like pieces across the knife edges, tearing the pieces apart and releasing a finely texturized fiber at a rate of about one pound per hour. The fiber had an average minimum L/D ratio of between five and 100 or more. The bulk density of the texturized fiber was on the order of 0.1 g/cc. A sample of texturized fiber is shown in Fig. 5 at normal magnification, and in Fig. 2 at fifty-fold magnification.

### Example 2

Composites of texturized fiber and resin were prepared as follows. A standard rubber/plastic compounding 2-roll mill was heated to 325-400°F. The resin (usually in the form of pellets or granules) was added to the heated roll mill. After about 5 to 10 minutes, the resin banded on the rolls (i.e., it melted and fused on the rolls). The coupling agent was then added to the roll mill. After another five minutes, the texturized cellulosic or lignocellulosic material was added to the molten resin/coupling agent mixture. The cellulosic or lignocellulosic fiber was added over a period of about 10 minutes.

The composite was then removed from the roll mill, cut into sheets, and allowed to cool to room temperature. Batches of about 80 g each were compression molded into 6" x 6" x 1/8" plaques using standard compression molding techniques.

One composite contained the following ingredients:

| Composition No 1 | |
|---|---|
| Ingredient | Amount(g) |
| High density polyethylene¹ | 160 |
| Old newspaper² | 240 |
| Coupling agent³ | 8 |

| | |
|---|---|
| ¹Marlex 16007 ² Texturized using rotary cutter with 2 mm mesh ³ FUSABOND^{®} 100D | |

The plaques were machined into appropriate test specimens and tested according to the procedures outlined in the method specified. Three different specimens were tested for each property, and the mean value for each test was calculated. The properties of Composition No. 1 are as follows:

| | |
|---|---|
| Flexural strength (10³ psi) | 9.81 (ASTM D790) |
| Flexural modulus (10⁵ psi) | 6.27 (ASTM D790) |

A second composite contains the following ingredients:

| Composition No 2 | |
|---|---|
| Ingredient | Amount(g) |
| High density polyethylene¹ | 160 |
| Old magazines² | 240 |
| Coupling agent³ | 8 |

| | |
|---|---|
| ¹ Marlex 16007 ² Texturized using rotary cutter with 2 mm mesh ³ FUSABOND^{®} 100D | |

The properties of Composition No. 2 are as follows:

| | |
|---|---|
| Flexural strength (10³ psi) | 9.06 (ASTM D790) |
| Flexural modulus (10⁵ psi) | 6.78 (ASTM D790) |

A third composite contains the following ingredients:

| Composition No 3 | |
|---|---|
| Ingredient | Amount(g) |
| HDPE¹ | 160 |
| Fiber paper² | 216 |
| 3.1 mm texturized kenaf | 24 |
| Coupling agent³ | 8 |

| | |
|---|---|
| ¹ Marlex 16007 ² Texturized using rotary cutter with 2 mm mesh ³ FUSABOND^{®} 100D | |

The properties of Composition No. 3 are as follows:

| | |
|---|---|
| Flexural strength (10³ psi) | 11.4 (ASTM D790) |
| Flexural modulus (10⁵ psi) | 6.41 (ASTM D790) |

A fourth composite contains the following ingredients:

| Composition No 4 | |
|---|---|
| Ingredient | Amount (g) |
| SUPERFLEX^{®} CaCO₃ | 33 |
| Fiber^{2,4} | 67 |
| HDPE (w/3% compatibilizer)^{1,3} | 100 |

| | |
|---|---|
| ¹ Marlex 16007 ² Texturized using rotary cutter with 2 mm mesh ³FUSABOND^{®} 100D ⁴Virgin polycoated milk cartons | |

The properties of Composition No. 4 are as follows:

| | |
|---|---|
| Flexural strength (10⁵ psi) | 8.29 (ASTM D790) |
| Ultimate elongation (%) | <5 (ASTM D638) |
| Flexural modulus (10⁵ psi) | 10.1 (ASTM D790) |
| Notch Izod (ft-lb/in) | 1.39 (ASTM D256-97) |

A fifth composite contains the following ingredients:

| Composition No. 5 | |
|---|---|
| Ingredient | Amount (parts) |
| SUPERFLEX^{®} CaCO₃ | 22 |
| Fiber^{2,4} | 67 |
| HDPE (w/3% compatibilizer)^{1,3} | 100 |

| | |
|---|---|
| ¹ Marlex 16007 ² Texturized using rotary cutter with 2 mm mesh ³ FUSABOND^{®} 100D ⁴Virgin polycoated milk cartons | |

The properties of Composition No. 5 are as follows:

| | |
|---|---|
| Flexural strength (10⁵ psi) | 8.38 (ASTM D790) |
| Ultimate elongation (%) | <5 (ASTM D638) |
| Flexural modulus (10⁵ psi) | 9.86 (ASTM D790) |
| Notch Izod (ft-lb/in) | 1.37 (ASTM D256-97) |

A sixth composite contains the following ingredients:

| Composition No 6 | |
|---|---|
| Ingredient | Amount (parts) |
| ULTRAFLEX^{®} CaCO₃ | 33 |
| Fiber^{2,4} | 67 |
| HDPE/compatibilizer^{1,3} | 100 |

| | |
|---|---|
| ¹ Marlex 16007 ² Texturized using rotary cutter with 2 mm mesh ³ FUSABOND^{®} 100D ⁴ Virgin polycoated milk cartons | |

The properties of Composition No. 6 are as follows:

| | |
|---|---|
| Flexural strength (10⁵ psi) | 7.43 (ASTM D790) |
| Ultimate elongation (%) | <5 (ASTM D638) |
| Flexural modulus (10⁵ psi) | 11.6 (ASTM D790) |
| Notch Izod (ft-lb/in) | 1.27 (ASTM D256-97) |

A seventh composite contains the following ingredients:

| | |
|---|---|
| Composition No 7 | |
| Ingredient | Amount (pbw) |
| HDPE (w/3% compatibilizer)^{3,5} | 60 |
| Kraftboard² | 40 |

| | |
|---|---|
| ¹ Marlex 16007 ² Texturized using rotary cutter with 2 mm mesh ³ FUSABOND^{®} 100D ⁴ Virgin polycoated milk cartons ⁵ HDPE with melt-flow index <1 | |

The properties of Composition No. 7 are as follows:

| | |
|---|---|
| Flexural Strength (10⁵ psi)7.79 (ASTM D790) | |
| Ultimate elongation (%) | <5 (ASTM D638) |
| Flexural Modulus (10⁵ psi) | 7.19 (ASTM D790) |

An eighth composite contains the following ingredients:

| Composition No 8 | |
|---|---|
| Ingredient | Amount (g) |
| High density polyethylene¹ | 160 |
| Poly-coated paper² | 240 |
| Coupling agent³ | 8 |

| | |
|---|---|
| ¹ Marlex 6007, melt flow index 0.65 g/10 min, commercially available from Phillips ² Texturized using rotary cutter with 2 mm mesh ³ POLYBOND^{®} 3009, commercially available from Uniroyal Chemical | |

The properties of Composition No. 8 are as follows:

| | |
|---|---|
| Tensile modulus (10⁵ psi) | 8.63 (ASTM D638) |
| Tensile strength at break (psi) | 6820 (ASTM D638) |
| Ultimate elongation (%) | <5 (ASTM D638) |
| Flexural Strength (psi) | 12,200 (ASTM D790) |
| Flexural modulus (10⁵ psi) | 6.61 (ASTM D790) |

A ninth composite contains the following ingredients:

| Composition No. 9 | |
|---|---|
| Ingredient | Amount (g) |
| High density polyethylene¹ | 160 |
| Poly-coated paper² | 240 |
| Coupling agent³ | 8 |

| | |
|---|---|
| ¹ Scrapped milk jugs, melt flow index approximately 0.8 g/10 min ² Texturized using rotary cutter with 2 mm mesh ³ POLYBOND^{®} 3009 | |

The properties of Composition No. 9 are as follows:

| | |
|---|---|
| Tensile modulus (10⁵ psi) | 7.38 (ASTM D638) |
| Tensile strength at break (psi) | 6500 (ASTM D638) |
| Ultimate elongation (%) | <5 (ASTM D638) |
| Flexural Strength (psi) | 11,900 (ASTM D790) |
| Flexural modulus (10⁵ psi) | 6.50 (ASTM D790) |

A tenth composite contains the following ingredients:

| Composition No 10 | |
|---|---|
| Ingredient | Amount (g) |
| High density polyethylene¹ | 160 |
| Poly-coated paper² | 240 |
| Coupling agent³ | 8 |

| | |
|---|---|
| ¹ Scrap milk jugs, melt flow index approximately 0.8 g/10 min ² Texturized using rotary cutter with 2 mm mesh ³ FUSABOND^{®} MB 100D, commercially available from DuPont | |

The properties of Composition No. 10 are as follows:

| | |
|---|---|
| Tensile modulus (10⁵ psi) | 7.08 (ASTM D638) |
| Tensile strength at break (psi) | 6480 (ASTM D638) |
| Ultimate elongation (%) | <5 (ASTM D638) |
| Flexural Strength (psi) | 10,200 (ASTM D790) |
| Flexural modulus (10⁵ psi) | 5.73 (ASTM D790) |

An eleventh composite contains the following ingredients:

| Composition No 11 | |
|---|---|
| lngredient | Amount(g) |
| High density polyethylene¹ | 160 |
| Poly-coated paper² | 240 |
| Coupling agent³ | 8 |

| | |
|---|---|
| ¹ Marlex 6007, melt flow index 0.65 g/10 min ²texturized using rotary cutter with 2 mm mesh ³ FUSABOND^{®} MB 100D | |

The properties of Composition No. 11 are as follows:

| | |
|---|---|
| Tensile modulus (10⁵ psi) | 7.17 (ASTM D638) |
| Tensile strength at break (psi) | 6860 (ASTM D638) |
| Ultimate elongation (%) | <5 (ASTM D638) |
| Flexural Strength (psi) | 12,200 (ASTM D790) |
| Flexural modulus (10⁵ psi) | 7.50 (ASTM D790) |

Other embodiments are within the claims.

## Claims

1. A composite comprising (a) a texturized fibrous material comprising a cellulosic or lignocellulosic material having internal fibers, (b) a thermoplastic resin, and (c) an inorganic additive, wherein said cellulosic or lignocellulosic material is sheared to the extent that the internal fibers are substantially exposed,
and wherein the resin is selected from the group consisting of polyethylene, polypropylene, polystyrene, polycarbonate, polybutylene, thermoplastic polyesters, polyethers, thermoplastic polyurethane, polyvinylchloride, and polyamides.

2. The composite of claim 1, wherein the cellulosic material comprises poly-coated paper.

3. The composite of claim 2, wherein the poly-coated paper comprises polyethylene and paper.

4. The composite of claim 3, wherein the poly-coated paper further comprises one or more layers of aluminum.

5. The composite of claim 1, wherein said cellulosic or lignocellulosic material is selected from the group consisting of flax, hemp, cotton, jute, rags, paper, paper products, and byproducts of paper manufacturing.

6. The composite of claim 1, wherein the cellulosic or lignocellulosic material is pulp board.

7. The composite of claim 1, wherein the cellulosic or lignocellulosic material is a synthetic material.

8. The composite of claim 1, wherein the cellulosic or lignocellulosic material is a non-woven material.

9. The composite of claim 1, wherein at least about 50% of the fibers have a length/diameter ratio of at least about 5.

10. The composite of claim 1, wherein at least about 50% of the fibers have a length/diameter ratio of at least about 25.

11. The composite of claim 1, wherein at least about 50% of the fibers have a length/diameter ratio of at least about 50.

12. The composite of claim 1, wherein the inorganic additive is selected from the group consisting of calcium carbonate, graphite, asbestos, wollastonite, mica, glass, fiber glass, chalk, talc, silica, ceramic, ground construction waste, tire rubber powder, carbon fibers, and metal fibers.

13. The composite of claim 1, wherein the inorganic additive comprises from about 0.5% to about 20% of the total weight of the composite.

14. The composite of claim 1, wherein said composite is in the form of a pallet.

15. The composite of claim 14, wherein said pallet is injection molded.

16. The composite of claim 1, wherein said composite is in the form of an article selected from the group consisting of panels, pipes, decking materials, boards, housings, sheets, poles, straps, fencing, members, doors, shutters, awnings, shades, signs, frames, window casings, backboards, wallboards, flooring, tiles, railroad ties, forms, trays, tool handles, stalls, bedding, dispensers, staves, wraps, totes, barrels, boxes, packing materials, baskets, straps, slips, racks, casings, binders, dividers, walls, indoor and outdoor carpets, rugs, wovens, and mats, frames, bookcases, sculptures, chairs, tables, desks, art, toys, games, wharves, piers, boats, masts, pollution control products, septic tanks, automotive panels, substrates, computer housings, above- and below-ground electrical casings, furniture, picnic tables, tents, playgrounds, benches, shelters, sporting goods, beds, bedpans, thread, cloth, plaques, trays, hangers, servers, pools, insulation, caskets, bookcovers, clothes, canes, crutches, and other construction, agricultural, material handling, transportation, automotive, industrial, environmental, naval, electrical, electronic, recreational, medical, textile, and consumer products.

17. The composite of claim 1, wherein said composite is in the form of a fiber, filament, or film.

## Patentansprüche

1. Verbundstoff, der (a) ein texturiertes Fasermaterial, das ein Cellulose- oder ligninhaltiges Cellulosematerial mit internen Fasern umfasst, (b) ein thermoplastisches Harz und (c) ein anorganisches Additiv umfasst, wobei das Cellulose- oder ligninhaltige Cellulosematerial in einem derartigen Ausmaß, dass die internen Fasern im wesentlichen freigelegt sind, geschert ist und wobei das Harz aus der Gruppe von Polyethylen, Polypropylen, Polystyrol, Polycarbonat, Polybutylen, thermoplastischen Polyestern, Polyethern, thermoplastischem Polyurethan, Polyvinylchlorid und Polyamiden ausgewählt ist.

2. Verbundstoff nach Anspruch 1, wobei das Cellulosematerial poly-beschichtetes Papier umfasst.

3. Verbundstoff nach Anspruch 2, wobei das poly-beschichtete Papier Polyethylen und Papier umfasst.

4. Verbundstoff nach Anspruch 3, wobei das poly-beschichtete Papier ferner eine oder mehrere Aluminiumschichten umfasst.

5. Verbundstoff nach Anspruch 1, wobei das Cellulose-oder ligninhaltige Cellulosematerial aus der Gruppe von Flachs, Hanf, Baumwolle, Jute, Hadern, Papier, Papierprodukten und Nebenprodukten der Papierherstellung ausgewählt ist.

6. Verbundstoff nach Anspruch 1, wobei das Cellulose-oder ligninhaltige Cellulosematerial Zellstoffpappe ist.

7. Verbundstoff nach Anspruch 1, wobei das Cellulose-oder ligninhaltige Cellulosematerial ein synthetisches Material ist.

8. Verbundstoff nach Anspruch 1, wobei das Cellulose-oder ligninhaltige Cellulosematerial ein nichtgewebtes Material ist.

9. Verbundstoff nach Anspruch 1, wobei mindestens etwa 50 % der Fasern ein Länge/Durchmesser-Verhältnis von mindestens etwa 5 aufweisen.

10. Verbundstoff nach Anspruch 1, wobei mindestens etwa 50 % der Fasern ein Länge/Durchmesser-Verhältnis von mindestens etwa 25 aufweisen.

11. Verbundstoff nach Anspruch 1, wobei mindestens etwa 50 % der Fasern ein Länge/Durchmesser-Verhältnis von mindestens etwa 50 aufweisen.

12. Verbundstoff nach Anspruch 1, wobei das anorganische Additiv aus der Gruppe von Calciumcarbonat, Graphit, Asbest, Wollastonit, Glimmer, Glas, Glasfaser, Kreide, Talkum, Siliciumdioxid, Keramik, Erdbauaushub, Reifenkautschukpulver, Carbonfasern und Metallfasern ausgewählt ist.

13. Verbundstoff nach Anspruch 1, wobei das anorganische Additiv etwa 0,5 % bis etwa 20 % des Gesamtgewichts des Verbundstoffs ausmacht.

14. Verbundstoff nach Anspruch 1, wobei der Verbundstoff in der Form einer Palette vorliegt.

15. Verbundstoff nach Anspruch 14, wobei die Palette spritzgegossen wurde.

16. Verbundstoff nach Anspruch 1, wobei der Verbundstoff in der Form eines Gegenstands vorliegt, der aus der Gruppe von Panelen, Rohren, Deckmaterialien, Brettern, Gehäusen, Lagen, Stäben, Riemen, einer Umzäunung, Baugliedern, Türen, Verschlüssen, Markisenstoffen, Schirmen, Schildern, Rahmen, Fenstereinfassungen, Rückenbrettern, Leichtbauplatten, Bodenbelag, Fliesen, Eisenbahnschwellen, Formen, Schalen, Werkzeuggriffen, Ständen, einer Einbettung, Dispensiervorrichtungen, Dauben, Umhüllungen, Transportmitteln, Tonnen, Schachteln, Verpackungsmaterialien, Körben, Riemen, Gleitmitteln, Racks, Einhausungen, Bindemitteln, Unterteilungen, Wänden, Innen- und Außenteppichen, Brücken, Geweben und Matten, Rahmen, Buchregalen, Skulpturen, Stühlen, Tischen, Schreibtischen, Kunst, Spielzeugen, Spielen, Wirteln, Piers, Booten, Masten, Verschmutzungskontrollprodukten, Faulbehältern, Kraftfahrzeugpanelen, Substraten, Computergehäusen, ober- und unterirdischen Elektrogehäusen, Möbeln, Picknicktischen, Zelten, Spielplätzen, Bänken, Schutzvorrichtungen, Sportartikeln, Betten, Wärmflaschen, Faden, Tuch, Lochplatten, Schalen, Gehängen, Servern, Pools, Isolierungen, Fässern, Buchdecken, Stoffen, Rohrstöcken, Krücken und anderen Konstruktionsprodukten, landwirtschaftlichen Produkten, Materialhandhabungsprodukten, Transportprodukten, Kraftfahrzeugprodukten, Industrieprodukten, Umweltprodukten, Schiffsprodukten, Elektroprodukten, Elektronikprodukten, Erholungsprodukten, Medizinprodukten, Textilprodukten und Verbraucherprodukten ausgewählt ist.

17. Verbundstoff nach Anspruch 1, wobei der Verbundstoff in der Form einer Faser, eines Filaments oder Films vorliegt.

## Revendications

1. Composite comprenant (a) un matériau fibreux texturé comprenant un matériau cellulosique ou lignocellulosique ayant des fibres internes, (b) une résine thermoplastique et (c) un additif inorganique, dans lequel ledit matériau cellulosique ou lignocellulosique est cisaillé au point que les fibres internes sont substantiellement exposées, et dans lequel la résine est choisie dans le groupe constitué par le polyéthylène, le polypropylène, le polystyrène, le polycarbonate, le polybutylène, les polyesters thermoplastiques, les polyéthers, le polyuréthane thermoplastique, le polychlorure de vinyle et les polyamides.

2. Composite selon la revendication 1, dans lequel le matériau cellulosique comprend du papier multicouche.

3. Composite selon la revendication 2, dans lequel le papier multicouche comprend du polyéthylène et du papier.

4. Composite selon la revendication 3, dans lequel le papier multicouche comprend en outre une ou plusieurs couches d'aluminium.

5. Composite selon la revendication 1, dans lequel ledit matériau cellulosique ou lignocellulosique est choisi dans le groupe constitué par le lin, le chanvre, le coton, le jute, les chiffons, le papier, les produits papetiers, et les sous-produits de la fabrication du papier.

6. Composite selon la revendication 1, dans lequel le matériau cellulosique ou lignocellulosique est du carton-bois.

7. Composite selon la revendication 1, dans lequel le matériau cellulosique ou lignocellulosique est un matériau synthétique.

8. Composite selon la revendication 1, dans lequel le matériau cellulosique ou lignocellulosique est un matériau non tissé.

9. Composite selon la revendication 1, dans lequel au moins 50 % environ des fibres ont un rapport longueur/diamètre d'au moins environ 5.

10. Composite selon la revendication 1, dans lequel au moins 50 % environ des fibres ont un rapport longueur/diamètre d'au moins environ 25.

11. Composite selon la revendication 1, dans lequel au moins 50 % environ des fibres ont un rapport longueur/diamètre d'au moins environ 50.

12. Composite selon la revendication 1, dans lequel l'additif inorganique est choisi dans le groupe constitué par le carbonate de calcium, le graphite, l'amiante, la wollastonite, le mica, le verre, la fibre de verre, la craie, le talc, la silice, la céramique, les déchets de construction broyés, la poudre de caoutchouc de pneu, les fibres de carbone, et les fibres métalliques.

13. Composite selon la revendication 1, dans lequel l'additif inorganique constitue environ 0,5 % à environ 20 % du poids total du composite.

14. Composite selon la revendication 1, dans lequel ledit composite se présente sous la forme d'une plaque.

15. Composite selon la revendication 14, dans lequel ladite plaque est moulée par injection.

16. Composite selon la revendication 1, dans lequel ledit composite se présente sous la forme d'un article choisi dans le groupe constitué par des panneaux, des tuyaux, des matériaux de plancher, des planches, des boîtiers, des feuilles, des poteaux, des brides, des clôtures, des éléments, des portes, des volets, des marquises, des stores, des panneaux indicateurs, des bâtis, des châssis de fenêtre, des dossiers, des panneaux de revêtements, des revêtements de sol, des tuiles, des traverses de chemin de fer, des formes, des plateaux, des manches d'outil, des cabines, de la literie, des distributeurs, des douves, des nappes, des fourre-tout, des fûts, des boîtes, des matériaux d'emballage, des paniers, des brides, des rails intermédiaires, des étagères, des enveloppes, des reliures, des cloisons, des murs, des tapis d'intérieur et d'extérieur, des carpettes, des tissus, des paillassons, des bâtis, des bibliothèques, des sculptures, des chaises, des tables, des bureaux, de l'art, des jouets, des jeux, des quais, des appontements, des bateaux, des mâts, des produits de lutte contre la pollution, des fosses septiques, des panneaux automobiles, des substrats, des boîtiers d'ordinateur, des boîtiers électriques au dessus et au dessous du sol, du mobilier, des tables de pique-nique, des tentes, des terrains de jeu, des bancs, des abris, des articles de sport, des lits, des bassins de lit, des filetages, de la toile, des plaques, des plateaux, des cintres, des dessertes, des piscines, de l'isolation, des cercueils, des couvertures de livre, des vêtements, des cannes, des béquilles, et autres produits de construction, produits agricoles, produits de manutention, produits de transport, produits automobiles, industriels, écologiques, navals, électriques, électroniques, récréatifs, médicaux, textiles et de consommation.

17. Composite selon la revendication 1, dans lequel ledit composite se présente sous la forme d'une fibre, d'un filament, ou d'un film.
